# EUROPEAN PATENT APPLICATION

(11) **EP 4 248 797 A1**
(43) Date of publication of application: **27.09.2023**
(21) Application number: 22167489.8
(22) Date of filing: 08.04.2022
(51) Int. Cl.: A47B 47/00, A47B 96/14, F16B 12/10, F16B 12/40, A47K 3/28, A47K 3/34, F16B 7/04, E06B 3/964, E04B 1/58

(54) **FRAME COMPONENT CONNECTION ARRANGEMENT**

(71) Applicant: Kingfisher International Products Limited, London W2 6PX (GB)
(72) Inventor: He, Evan, Shenzhen, 518055 (CN); Wei, Yi, Shenzhen, 518055 (CN)
(74) Representative: Sant, David Paul

(57) **Abstract**

A system for joining frame components, wherein a first and a second frame component has respectively a first and second endpiece configured to fit together, the system comprising at least one clip arrangement, each of the at least one clip arrangements comprising, on a first endpiece, a clip abutment and, on a second endpiece, a clip projection configured to clip on to, in a clipped state, the clip abutment, the system further comprising a connection lock element, configured to mate with the first endpiece and the second endpiece, when the at least one clip projection and the at least one clip abutment are in the clipped state, the connection lock element comprising at least one locking pin located, when the connection lock element is in the mated position, immediately adjacent the at least one clip projection, on the side of the clip projection opposite the clip abutment.

## Description

### TECHNICAL FIELD

The present disclosure relates to an improved apparatus and method for connecting together elongate components. The disclosure relates to the construction of a generally rectangular frame from a number of elongate components suitable to form the edges of the frame. In particular, the disclosure relates primarily to an arrangement and method for assembling a generally rectangular frame and joining together at the ends two or more elongate components forming the edges of the frame.

This disclosure relates to the joining of perimeter components of any frame to be assembled/disassembled, and may be applied in many different technical areas where such frames are used or present, including furniture, garden/outdoor equipment, industrial arrangements, shielding, housing, etc. In short, the subject-matter disclosed herein may be applied in any field where frames and frameworks, of a permanent or temporary nature, are erected or assembled. More specifically, it relates to the connection of perimeter components at the corners of such frames. The invention is not limited to the joining of constituent components of the frame at the frame corners, and the apparatus and method disclosed herein may also be applied to the linear connection (non-perpendicular) of such components at locations in the frame other than the corners thereof.

The subject-matter disclosed herein relates in particular, but not only, to frames such as a shower cubicle or other frames which are generally rectangular in form and arrangements, including at the corners of such a cubicle or frame, for fixing together the elements forming the perimeter pieces of the cubicle or frame.

### BACKGROUND OF THE INVENTION

Enclosures or frames or cubicles, such as those for showers, are conventionally assembled by fitting together a number of constituent components which when fitted together form the frame of the enclosure. Typically, some of the frame components may be fixed to an external structure, such as a wall or a floor, thereby anchoring the cubicle to the external structure. For cubicles which are generally rectangular in shape, the constituent components forming the edges of the frame are elongate and linear. However, the frame of a shower enclosure or shower cubicle may in principle be any shape and the constituent components forming the frame are not limited to linear shapes but can be any suitable shape according to the circumstances. Although the remainder of this disclosure makes reference only to linear frame components, the reader will understand that components with other non-linear forms are also within the contemplation of this disclosure.

Where the frame is a walk-in cubicle, it is will generally have at least one door to facilitate ingress/egress by the user into the cubicle. The door(s) are displaceable, either rotatably or slidably, and rely on some displacement mechanism, such as hinges or guideways to facilitate the movement.

For frames of generally rectangular shape adjacent frame components will be aligned perpendicular to each other and joined by means of a corner connecting element. In conventional arrangements the corner connecting element may have any suitable form but typically has multiple faces for receiving the ends of the adjacent frame components, the faces of the corner connecting element being arranged in the manner of faces of a cuboid, such that the ends of two adjacent frame components may be fixed to two adjacent faces of the corner connecting element by means of screws, bolts or other rotatable fixing means.

However, applying the screws, bolts etc can sometimes be very awkward and at inconvenient angles. To deliver sufficient torque to the screws, bolts etc an additional appliance, such as an electric screwdriver, hammer driver, power tool etc, may be required, as well as the appropriate power supply, both of which can be inconvenient, time-consuming and/or impractical.

Unless sophisticated torque measurements are also provided, there is also an inherent risk that the torque delivered will be incorrect: too little may mean that the screws, bolts, etc will be too loose; too much torque will cause excess mechanical stress on the screws, bolts and the threads in which they are inserted, and could lead to mechanical damage, mechanical failure and possible disassembly of the frame. Even where the frame components appear to be successfully fixed to a connecting element, excess or insufficient screwing of the screw, bolt or other rotatable fixing means, may nevertheless belie the soundness of the thus assembled frame and threaten the mechanical integrity of the frame at a later time. Incorrect application of the screws, bolts etc may lead to distortion of the frame, and, where the frame is that of a shower cubicle with shower doors, the moving parts, including the doors, may become jammed or inoperable, due to such distortion.

In general, the need, in conventional systems, to fit the frame components together using screws, bolts, etc renders the assembly of the frame slow and cumbersome. Poor or incorrect application of such fixing means may cause the assembly of the parts to be faulty, may damage the components and the frame itself, and lead to shortened product life.

### OBJECTIVE TECHNICAL PROBLEM

It is an objective of the present disclosure to provide an apparatus and method which overcomes the shortcomings of conventional frame assembly systems as set out above. The apparatus and method disclosed herein seeks to provide a system and process for assembling a frame comprising a number of constituent components and at least one corner connection unit, the apparatus and method being easy to use, convenient and quick to use, but nevertheless provides a solid reliable connection between constituent components.

A further objective of the apparatus and method disclosed herein is to provide a system comprising at least one connection lock element which may be easily, conveniently and quickly fitted to two connected constituent frame components. A yet further objective of the apparatus and method of the current disclosure is to provide a system and process for assembling a frame wherein at least one connection lock element may be fitted to a constituent frame component, without the use of screws, bolts or similar fixing means, thereby eliminating the risks and inconveniences set out above associated with incorrect application of such fixing means. It is an objective of the system and method disclosed herein to provide a novel and inventive connection lock element which fits to frame constituent components and fixes them together, by means other than screws or bolts or similar.

### BRIEF DESCRIPTION OF THE FIGURES

Reference is now made to certain embodiments of the apparatus and method according to the invention, one or more examples of which are illustrated among the accompanying drawings.
Figure 1 is an illustration of a general frame comprising constituent frame components;
Figure 2A illustrates an overview of two constituent frame components in accordance with an embodiment of the invention and Figure 2B illustrates an overview of two constituent frame components joined at their respective endpieces in accordance with an embodiment of the invention;
Figures 3A and 3B illustrate a first endpiece of a constituent frame component according to two embodiments of the invention;
Figures 4A and 4B are illustrations of a second endpiece of a constituent frame component according to two embodiments of the invention;
Figure 5 illustrates various views of a connection lock element according to an embodiment of the invention;
Figure 6 is an illustration of a first endpiece and a second endpiece (parts shown separated) according to embodiments of the invention;
Figure 7 is an illustration of a first endpiece joined to a second endpiece, with a separate connection lock element (shown separate in this figure) according to embodiments of the invention;
Figure 8 is a cross-sectional view of a first endpiece, second endpiece and a connection lock element (3 parts shown joined) according to embodiments of the invention;
Figure 9 illustrates a perspective view of two constituent frame components in accordance with an embodiment of the invention
Figure 10 provides two perspective views of a connection lock element according to an embodiment of the invention
Figures 11A-11C provide perspective views of two constituent frame components, with respective endpieces, and connection lock element at different stages of assembly
Figure 12 is a cross-sectional view of the two constituent frame components, with respective endpieces, and connection lock element when assembled together

### STATEMENT OF THE INVENTION

This disclosure relates to a novel and inventive system and method for connecting components of a frame.

An exemplary aspect of the system and method herein disclosed is directed to joining components of a frame, wherein a first endpiece fixed to an end of a first frame component and a second endpiece fixed to an end of a second frame component, the first and second endpieces being configured to fit together and comprising at least one clip arrangement, each of the at least one clip arrangements comprising, on the first endpiece, a clip abutment and, on the second endpiece, a clip projection configured to clip on to, in a clipped state, the clip abutment, and a connection lock element, configured to mate with the first endpiece and the second endpiece, when the at least one clip projection and the at least one clip abutment are in the clipped state, the connection lock element comprising at least one locking pin located, when the connection lock element is in the mated position, immediately adjacent the at least one clip projection, on the side of the clip projection opposite the clip abutment.

In accordance with another exemplary aspect of the system and method of this disclosure the at least one clip projection is composed of a resilient flexible material and capable of flexing transverse to the longitudinal axis of the at least one clip projection.

According to another embodiment of the system and method herein disclosed each of the at least one clip abutment comprises an abutment surface, a leading end surface and a trailing end surface, wherein the end surfaces are aligned perpendicular to the abutment surface.

In another aspect of the system and process herein disclosed each of the at least one clip projections comprises, at its distal end, a flange, extending perpendicular to the longitudinal axis of the at least one clip projection, the flange comprising a leading planar surface angled to the longitudinal and a trailing planar surface perpendicular to the longitudinal axis of the at least one clip projection.

In accordance with an embodiment of the arrangement and method of the present disclosure for each of the at least one clip arrangement, in the clipped state, the trailing surface of the flange interfaces with the trailing end surface of the clip abutment. In a further exemplary aspect of the apparatus and method disclosed herein there are two clip arrangements

According to an embodiment of the arrangement and method disclosed herewith, the second end piece further comprises a major pin and a minor pin, and the first endpiece further comprises a major aperture and a minor aperture, wherein the major pin and the minor pin are configured to cooperate with the major aperture and minor aperture respectively, and the minor pin and minor aperture are small in cross-section than the major pin and minor aperture respectively.

In an exemplary aspect of the system and method disclosed herein an adjacent side of the first endpiece is configured to cooperate with the second endpiece and, in the clipped position, the first frame component is fixed perpendicular to the second frame component.

In accordance with an exemplary embodiment of the system and method herein disclosed the locking pin is configured to block, in the mated position, any flexure of the clip projection in the at least one clip arrangement.

In a further aspect of the system and method herein disclosed the walls of the connection lock element are configured, in the mated position, to house the first and second endpiece joined in the clipped position. In an embodiment of the invention the frame is a shower cubicle.

In an exemplary aspect of the system and method disclosed herein a first endpiece fixed to an end of a first frame component, configured to fit together with a second endpiece fixed to an end of a second frame component, the first endpiece comprising at least one clip abutment, each of the at least one clip abutment being configured to be clipped onto by a clip projection of the second endpiece, the first endpiece being further configured to, when the at least one clip abutment and the at least one clip projection are in the clipped state, to mate, together with the second endpiece, with a connection lock element comprising at least one locking pin located, when the connection lock element is in the mated position, immediately adjacent the at least one clip projection, on the side of the clip projection opposite the clip abutment.

In a further embodiment according to the invention a first endpiece fixed to an end of a first frame component, configured to fit together with a second endpiece fixed to an end of a second frame component, the first endpiece comprising at least one clip projection, each of the at least one clip projections being configured to clip onto a clip abutment of the second endpiece, the first endpiece being further configured to, when the at least one clip abutment and the at least one clip projection are in the clipped state, to mate, together with the second endpiece, with a connection lock element comprising at least one locking pin located, when the connection lock element is in the mated position, immediately adjacent the at least one clip projection, on the side of the clip projection opposite the clip abutment.

According to a further embodiment of the invention a connection lock element is configured to mate with a first endpiece and a second endpiece when the first endpiece and second endpiece are clipped to each other, wherein: the first endpiece is fixed to the end of a first frame component and the second endpiece fixed to the end of a second frame component, the first and second endpieces being configured to fit together and comprising at least one clip arrangement, and; each of the at least one clip arrangements comprise, on the first endpiece, a clip abutment and, on the second endpiece, a clip projection configured to clip on to, in a clipped state, the clip abutment; he connection lock element comprises at least one locking pin, the locking pin being located, when the connection lock element is in the mated position, immediately adjacent the at least one clip projection, on the side of the clip projection opposite the clip abutment.

In accordance with an embodiment of the a method of joining components of a frame disclosed herein, the method comprises: clipping a first endpiece fixed to an end of a first frame component to a second endpiece fixed to an end of a second frame component, the first and second endpieces comprising at least one clip arrangement, wherein each of the at least one clip arrangements comprises, on the first endpiece, a clip abutment and, on the second endpiece, a clip projection configured to clip on to, in a clipped state, the clip abutment; mating a connection lock element with the first endpiece and the second endpiece, when the at least one clip projection and the at least one clip abutment are in the clipped state, the connection lock element comprising at least one locking pin, and; positioning the at least one locking pin, when the connection lock element is in the mated position, immediately adjacent the at least one clip projection, on the side of the clip projection opposite the clip abutment, and preventing movement of the at least one clip projection.

### DETAILED DESCRIPTION OF THE FIGURES AND EMBODIMENTS

The description makes use of certain numerical and letter references as appropriate to refer to features in the drawings. The same or similar references in the drawings and description have been used to indicate the same or similar parts of the apparatus.

Unless indicated otherwise by the context, any use of terms such as "first", "second", "third", "next", "successive", "last", as well as "highest", "higher", "lowest" and "lower" are adopted to distinguish one component from another, and are not intended to define any position, physical location, alignment, structure or actual order, or importance of the components specified, or to limit the alignment or structure of the embodiments described herein.. The singular forms "a", "an", and "the" include plural references, unless, based on the context, this is clearly not the case. Reference will be made in detail to examples and embodiments of a frame assembly, one or more of which are illustrated in the drawings. The embodiments and examples are provided for the purpose of explanation and not to limit the invention in any way. It will be apparent to those skilled in the art that various modifications and variations may be made in the present invention within the scope of the invention which is defined in the claims. Features illustrated or described as present in any one embodiment may also be used with another embodiment, thereby providing a yet further embodiment. The present invention covers any variations, amendments and modifications which fall within the scope of the accompanying claims and their equivalents. Various embodiments, aspects and implementations of the present invention, as well as technical objectives and advantages will be apparent to those skilled in the art, upon consideration of the description herein, in combination with the drawings.

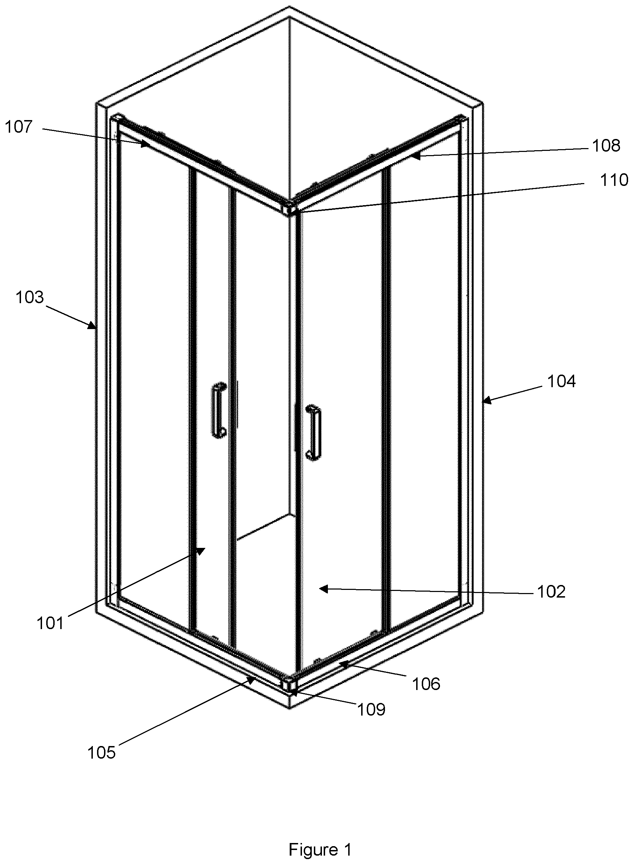

Fig 1 shows a conventional frame arrangement. The frame depicted in Fig 1 is a shower cubicle and is rectangular or cuboid in form with two doors on adjacent sides of the cubicle. In both conventional arrangements, as well as in arrangements according to the invention, the form of the frame - shower cubicle or otherwise - may be non-rectangular (non-cuboid) and may be any suitable shape, and the doors, depicted in Fig 1 may be movable by sliding, may instead be pivotable about at least two hinges aligned in a vertical line parallel to the sides of the frame. The doors (101,102) may occupy a complete side of the cubicle. In both conventional arrangements and in arrangements according to the invention the edges of the cubicle consist of constituent frame components, which may, for rectangular frames, be elongate and linear in form. The frame, if it is cuboid in form, has eight corners, as shown in Fig 1.

Six of the eight corners of the frame shown in Fig 1 are fixed to an external structure, eg a wall, which provides additional support, such that the six corners are intrinsically stronger. However, the two corners depicted in the front in Fig 1 are not fixed directly to the wall and do not benefit directly from its support, ie the top front apex and bottom front apex (110, 109). Furthermore, in the Fig 1 arrangement, it is this vertical edge of the frame (between the two corners at the front of the cubicle structure), which forms the opening or entrance into the cubicle: this edge is located between the two doors. The reader will understand that the two corners (the top front apex and bottom front apex in Fig 1) are weak points of the frame structure. Either side of each of these corners are two constituent frame components (105, 106, 107, 108) which extend perpendicularly to each other from the corner.

An arrangement and method according to an embodiment of the invention, as disclosed herein, may also be applied in respect of any connection of any two constituent frame components, and is not limited to corner connections at the top front apex and bottom front apex of a cuboid frame, such as that shown in Fig 1. The arrangement and method disclosed herein may, for example, be used at any of the eight corners of a cuboid frame, such as that illustrated in Fig 1. The reader will understand that the arrangement and method according to the invention is equally applicable, and may be used, to connect two constituent frame components, one (103,104) of which is vertically aligned, and may, for example, be fixed to a wall or other support, as explained herein.

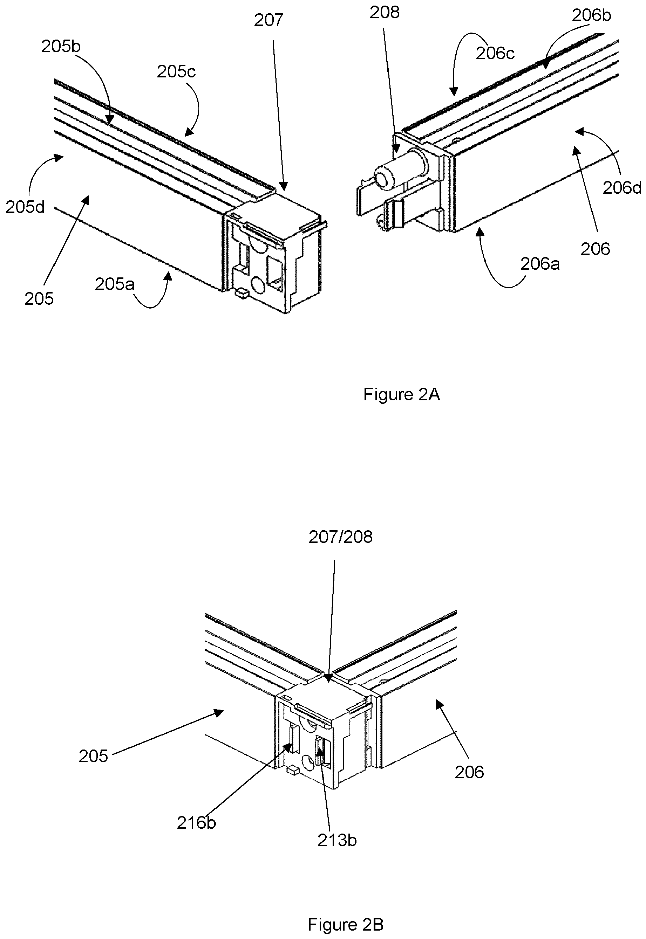

Two constituent frame components (205, 206) according to an embodiment of the invention are shown in more detail in Figs 2A and 2B. Each constituent frame component (205, 206) may be generally square or rectangular in cross-section and may comprise four elongate planar faces (205a, 205b, 205c, 205d, 206a, 206b, 206c, 206d) extending longitudinally along the respective constituent frame component, each face configured to be parallel or perpendicular to the frame, when assembled. The four elongate planar faces of each constituent frame component may be designated a lower (205a, 206a), an upper (205b, 206b), an inner lateral (205c, 206c), and an outer lateral side (205d, 206d), wherein, when the frame is assembled, the upper faces of two adjacent constituent frame components are in the same plane and the lower faces of two adjacent constituent frame components are in the same plane, and wherein, when the frame is assembled, the inner lateral side of two adjacent constituent frames components are perpendicular to each other and the outer lateral side of two adjacent constituent frame components are perpendicular to each other.

Fig 2A illustrates in overview a first constituent frame component (205) and a second constituent frame component (206) according to an embodiment of the invention. and further comprises, at each of the adjacent ends, an endpiece (207, 208). As shown in Fig 2B, the endpiece of the first constituent frame component (the first endpiece (207)) is configured to cooperate with the endpiece of the second constituent frame component (the second endpiece (208)) and both endpieces (207, 208) are configured to cooperate with the connection lock element (not shown in Figs 2A and 2B), as described in a later passage.

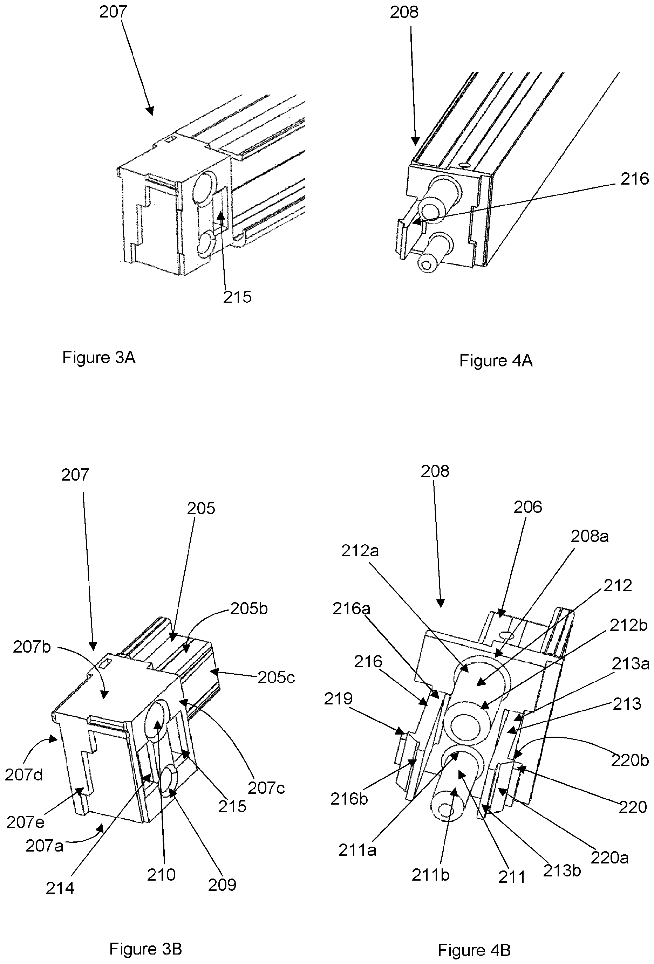

The structures of the first endpiece and second endpiece (207, 208) according to an embodiment of the invention are illustrated in detail in Figs 3A, 3B, 4A and 4B. Each pair of first and second endpieces (207, 208) may comprise one clip arrangement (see Fig 3A and 4A) or multiple clip arrangements (see Figs 3B and 4B) as discussed in a later section herein.

In an embodiment of the invention, the first endpiece (207) may be generally cuboid in overall shape and has dimensions approximately equal to those of the cross-sections of the first constituent frame component (205). Being cuboid in shape the first endpiece has a base (not visible in Figs 3A ,3B) joining, via a first nexus (232) (not visible in Figs 3A, 3B), the first constituent frame component (205), a distal surface (207e) and four adjacent surfaces (207a, 207b, 207c, 207d), each of which is broadly parallel to the four surfaces (205a, 205b, 205c, 205d) of the first constituent frame component (205) but perpendicular to the distal surface (207e) of the first endpiece (207). In Figs 3A and 3B, one of the adjacent sides of the first endpiece (207), the cooperating side (207c), is configured to cooperate with the second endpiece (208). The base of the first endpiece (207) comprises is rectangular and its perimeter broadly coincides with the cross-section of the first constituent frame component (205). The second endpiece (208) comprises a base (208a) the perimeter of which broadly coincides with the cross-section of the second constituent frame component (206), and a number of projections. The base (208a) of second endpiece (208) is joined to the second constituent frame component (206) via a second nexus (233), (not visible in Figs 3A, 3B).

Each of the first endpiece (207) and the second endpiece (208) may be a single integral piece fabricated, for example, by a moulding technique, or may be composed of separate parts which are subsequently permanently fixed together. The first and second endpieces (207, 208) may be made of inexpensive resilient material. The first endpiece (207) and the second endpiece (208) comprise a first fixing means and a second fixing means, as explained below, configured to facilitate the fixing of the first endpiece (207) to the second endpiece (208). The first fixing means and second fixing means are now explained.

The first fixing means comprises a minor aperture (209) and major aperture (210) on the cooperating side (207c) of the first endpiece (207), the minor and major apertures (209, 210) being configured to respectively receive a minor pin (211) and major pin (212), both pins (211, 212) being arranged on the second endpiece (208). The positions of the two pins (211, 212) on the second endpiece (208) may be aligned parallel with one of the sides (upper, lower, inner lateral or outer lateral (206a, 206b, 206c, 206d) of the second constituent frame component (206), if the second constituent frame component (206) is rectangular in cross-section, or the position of each pin (211, 212) may be any suitable position on the second endpiece (208), as long as the location of each pin (211, 212) is configured to align with the respective aperture (209, 210) in the first endpiece (207). The minor pin (211) and the major pin (212) are joined at their respective proximal ends (211a, 212a) to the second endpiece (208) and extend from the second endpiece (208) in a direction parallel to the second constituent frame component (206).

Each or both of the minor and major pins (211, 212), as well as each of the minor and major apertures (209, 210), may be circular in cross-section, although other geometries may also be envisaged. The minor aperture (209) is dimensioned and shaped to receive the minor pin (211) and the major aperture (210) is dimensioned and shaped to receive the major pin (212). To facilitate insertion of each pin (211, 212) in the respective aperture (209, 210), each or both of the minor and major pins (211, 212) may be slightly tapered along its length such that the distal end (211b, 212b) is slightly narrower in width, or diameter (where the cross-section is circular), than the proximal end (211a, 212a). The distal ends (211b, 212b) of each the minor and major pins (211, 212) may be rounded or curved, again to facilitate insertion in the respective aperture (209, 210).

However, the minor aperture (209) and minor pin (211) may be dimensioned and shaped differently from the major aperture (210) and major pin (212) to prevent the insertion of a pin in the incorrect aperture. Thus, the minor aperture (209) may be dimensioned and shaped to prevent receipt of the major pin (212), and the major aperture (210) is dimensioned and shaped to prevent receipt of the minor pin (211). In other words, there is no risk that the minor or the major pin (211, 212) are inserted in the wrong aperture, because the minor and major pins (211, 212) are designed to cooperate only with the minor and major apertures (209, 210) respectively. Thus, if either of the first or second endpieces (207, 208) are inadvertently inverted, because a constituent frame component has been, for whatever reason, incorrectly oriented, the user is prevented from joining the two endpieces (207, 208) because they can only be connected in the predetermined orientation.

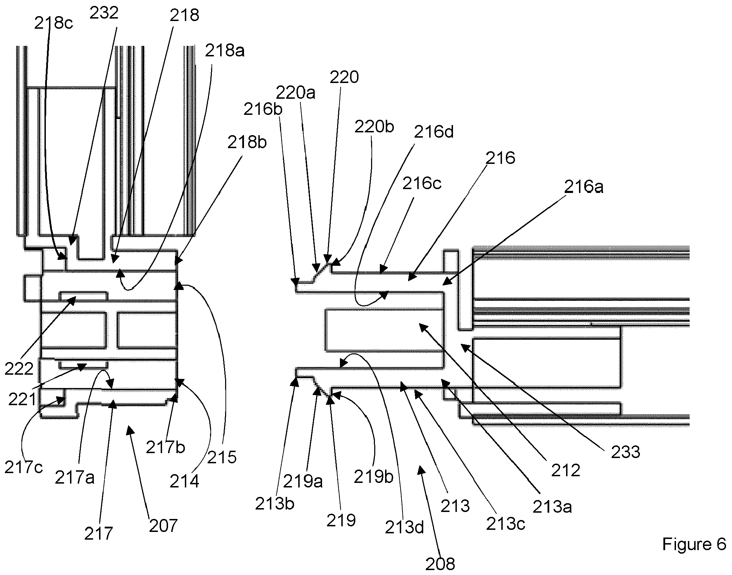

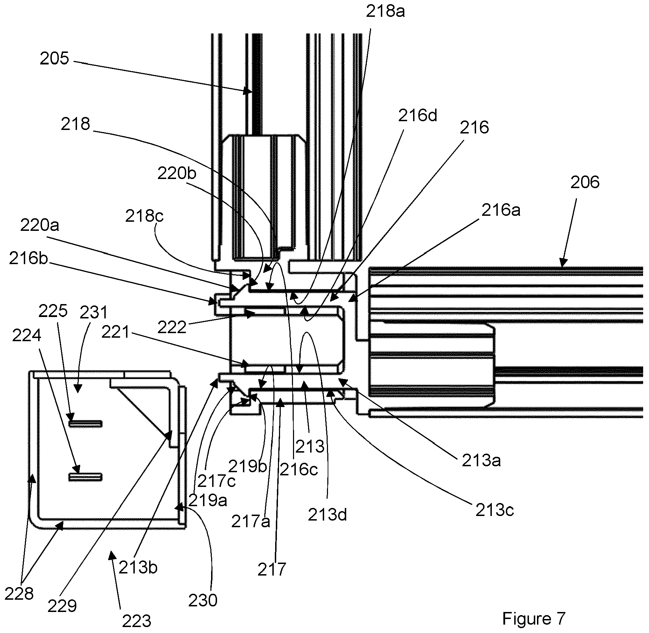

The second fixing means comprises at least one clip arrangement (213, 214, 215, 216, 217,218), each of the at least one clip arrangements comprising a clip projection (213, 216) on the second endpiece (208) , as well as a clip aperture (214, 215) on the cooperating side (207c) of the first endpiece (207) and a clip abutment (217, 218) (not visible in Figs 3 and 4, but visible in for example Figs 6 and 7) in the first endpiece (207), the clip projection (213, 216) being configured to be inserted into the clip aperture (214, 215) and, after insertion into the clip aperture (214, 215), to engage with at least one clip abutment (217) in the first endpiece (207). As shown for example at Fig 6, each clip abutment (217, 218) may be broadly cuboid in form, comprising a planar abutment surface (217a, 218a) and two planar end surfaces (217b, 217c, 218b, 218c,) at either end of, and perpendicular to, the planar abutment surface (217a, 218a) of the clip abutment (a leading end surface (217b, 218b) and a trailing end surface (217c, 218c). The abutment surface (217a, 218a) of the at least one clip abutment (217, 218) is aligned with the at least one clip aperture (214, 215) and configured to receive and interact with the at least one clip projection (213, 216) via the at least one clip aperture (214, 215).

Fig 3A and 4A shows a first and second endpiece (207, 208), according to an embodiment of the invention, comprising a single clip arrangement (215,216 and, not visible, 218), while Fig 3B and 4B shows a first endpiece and second endpiece (207, 208), according to an embodiment of the invention, comprising two clip arrangements (213, 214, 215, 216, and, not visible, 217, 218). Although the drawings show only one and two such clip arrangements, this is for brevity only and the reader will understand that the invention is not limited in the number of clip arrangements.

In Figs 3A, 3B, 4A and 4B the clip arrangements (clip projection (213, 216), clip aperture (214, 215) and clip abutment (217 and 218, (shown at Fig 6)) are, for the purpose of illustration, shown in a specific location, but within the endpieces (207, 208) any suitable location which does not conflict with the first fixing means may be envisaged. Where there is a plurality of clip arrangements (213, 214, 215, 216, 217,218), the clip projections (213, 216) and clip apertures (214, 215) may be located in positions which are generally aligned parallel to one of the sides (lower (206a), upper (206b), inner lateral (206c) or outer lateral (206d)) of the second constituent frame component (206). As long as elements of the clip arrangement interact in the manner herein described, the location of a clip arrangement (clip projection (213, 216), clip aperture (214, 215) and clip abutment (not shown)) within the endpieces (207, 208) may be modified, as appropriate.

The reader will understand that the endpieces (207, 208) according to the invention can comprise any number of clip arrangements (213, 214, 215, 216, 217, 218), as stated above: the clamping or clip function (as described in later passages herein) of each clip arrangement (213, 214, 215, 216, 217, 218) is in principle the same, irrespective of the number of such clip arrangements. While there may be structural, efficiency and other benefits which will favour configurations with a certain number of clip arrangements, and/or at certain positions in the endpieces (207, 208), the apparatus and method disclosed herein do not envisage any limitation on that number.

Each clip projection (213, 216) is elongate, having a longitudinal axis which extends outwardly from the second endpiece (208) of the second constituent frame component (206), from its proximal end (213a, 216a) at the second endpiece base (208a) to its distal end (213b, 216b). The clip projection(s) (213, 216) may be cuboid in form, having a planar first surface and a planar second surface, parallel to the first surface. The at least one clip projection (213, 216) is capable of elastic flexure and is composed of any resilient material suitable for this purpose.

The distal end (213b, 216b) of each clip projection (213, 216) comprises a flange (219, 220) configured to engage with the clip abutment (217, 218). The flange (219, 220) extends perpendicularly to the longitudinal axis of the clip projection (213, 216) from the surface (213c, 216c) of the clip projection (213, 216) which is configured to impinge with the clip abutment (217, 218). The flange (219, 220) comprises two outer surfaces , both of which are planar: a first surface (219a, 220a) which is curved or bevelled or angled or inclined with respect to longitudinal axis of the clip projection (213, 216), and, during the insertion, forms the "leading" surface of the distal end (213b, 216b) of the clip projection (213, 216), and a second surface (or "trailing" surface) (219b, 220b), which is perpendicular to longitudinal axis of the clip projection (213, 216) and to the clip projection surface (213c, 216c) facing the clip abutment (217, 218). The edge of the flange (219, 220) is defined by the interface of the flange's leading surface (219a, 220a) and trailing flange surface (219b, 220b). The clip projection (213, 216) is dimensioned such that the length of the outer surface (213c, 216c) of the clip projection (213, 216) between its base and the trailing flange surface (219b, 220b) is slightly longer than the distance from the clip aperture (214, 215) to the trailing end surface (217c, 218c) of the clip abutment (217, 218): when a clip projection (213, 216) is fully inserted in the first endpiece (207) its trailing flange surface (219b, 220b) is located at, and aligned in parallel to, the second end surface (217c, 218c) of the clip abutment (217, 218).

The operation of a clip arrangement (213, 214, 215, 216, 217, 218) according to an embodiment of the invention is briefly described in the following passage and may be seen in Figs 6 and 7 (although these illustrate two clip arrangements, the engagement of each clip projection with the corresponding clip abutment is the same).

As the second endpiece (208) is inserted into the first endpiece (207), the minor and major pins (211, 212) of the first fixing means are inserted into the major and minor apertures (209, 210), and simultaneously the clip projection (213, 216) of the clip arrangement is inserted into the clip aperture (214,215). The clip abutment (217,218) in the first endpiece (207) is aligned parallel to the longitudinal axis of the clip projection (213,216). After insertion of the distal end of (213b, 216b) the clip projection (213,216) in the clip aperture (214,215), the second endpiece (208) may be displaced further along a direction parallel to the longitudinal axis of the clip projection (213,216), such that the clip projection (213,216) is moved further into the first endpiece (207) for engagement with the clip abutment (217, 218) of the first endpiece (207). The clip projection (213,216) advances further within the space behind the clip aperture (214,215), the leading flange surface (219a, 220a) on the distal end (213b,216b) of the clip projection (213,216) impinges on the clip abutment (217, 218). As the leading flange surface (219a, 220a) is bevelled (inclined with respect to the longitudinal axis of the clip projection and the abutment clip) the leading surface (219a, 220a) flexes the advancing clip projection (213,216) away from the clip abutment (217, 218). As displacement of the clip projection (213,216) continues along a trajectory which is parallel to, and adjacent, the abutment surface (217a, 218a) of the clip abutment (217, 218), the clip projection (213,216) being continuously flexed by the action of the abutment surface (217a, 218a) on the flange (219, 220).

As stated above, the clip projection (213,216), and flange (219, 220) thereon, are dimensioned to correspond to the abutment surface (217a, 218a) and end surfaces (217c, 218c) of the clip abutment (217, 218): when the clip projection (213,216) is fully inserted into the space and the flange edge (between the first and second surfaces (219a, 220a, 219b, 220b) of the flange) moves just beyond the end surface (217c, 218c) at the other end of the clip abutment (217, 218), the flange edge is no longer adjacent the abutment surface (217a, 218a) of the clip abutment (217, 218), the clip projection (213,216) and flange (219, 220) are "released" from the flexure and the resilience in the clip projection (213,216) pushes the flange (219, 220) to clip behind the clip abutment (217, 218). In this clipped position, the trailing flange surface (219b, 220b) (which, as stated above, is perpendicular to the outer surface (213c, 216c) of the clip projection (213,216)) is then located against the trailing end surface (217c, 218c) of the clip abutment (217, 218),with the outer surface (213c,216c) of the clip projection (213,216) located adjacent, and interfacing with, the abutment surface (217a, 218a). The clip projection (213,216) therefore resumes its pre-flexure shape and, in this position, the flange (219, 220) serves to prevent withdrawal of the clip projection (213,216).

The above explanation related to a single clip arrangement (clip projection (213,216), clip aperture (214, 215) and clip abutment (217, 218)), such as that depicted in Figs 3A and 4A, but the operation of each clip arrangement in a system with multiple clip arrangements is the same. As discussed previously, although the figures only illustrate single clip arrangements or double clip arrangements, the number of clip arrangements is not limited to any particular number.

The following section describes an embodiment of the apparatus and method disclosed herein, in which there are two clip arrangements, as in Figs 3B, 4B, 6, 7, 8.

The two clip projections (213,216) in an embodiment according to the invention and illustrated in Figs 3B, 4B, 6, 7, 8 are mirror images of each other, being otherwise identical in shape and dimensions. The collective structure of the two-clip arrangement is broadly U-shaped, with the two clip projections (213,216) forming the parallel sides of the U-shape, each clip projection (213,216) configured to engage with a separate clip abutment (217,218). As seen best in Fig 6, the surfaces of the two clip projections (213,216) form outer surfaces (213c, 216c) and inner surfaces (213d, 216d) of the two-clip arrangement, such that the inner surfaces (213d, 216d) of the two clip projections (213, 216) face each other and the outer surfaces (213c, 216c) of the two clip projections (213, 216) face outward and away from each other. In the embodiment shown in Fig 6 the inner surfaces (217a, 218a) of the two clip abutments (217,218) are parallel and face each other, as described below, but other orientations may be envisaged.

The reader will understand that the distal ends (213b, 216b) of the two clip projections (213, 216), ie the tops of the U-shape, are configured to "lead" the clip projections (213, 216) when being inserted into the clip apertures (214, 215). The flanges (219, 220) on the distal ends (213b, 216b) of each of the two clip projections (213, 216) are aligned parallel to each other, along the distal end (213b, 216b) of the respective clip projection (213, 216). The separation of the two abutment surfaces (217a, 218a) of the clip abutments (217, 218) is slightly wider than the separation of the two outer surfaces (213c, 216c) of clip projections (213, 216), notwithstanding the depth of the flanges (219, 220) (described below) on the outer surfaces (213c, 216c) of clip projections (213, 216), the space between the two abutment surfaces (217a, 218a) of clip abutments (217, 218) being dimensioned to accommodate the outer surfaces (213c, 216c) of the clip projections (213, 216).

However, as stated above, the flanges (219, 220) located on the outer surfaces (213c, 216c) of the clip projections (213, 216) extend perpendicular from the outer surfaces (213c, 216c), such that the distance between the extremities of the clip flanges (219, 220) is slightly wider than the width of the space between the clip abutment surfaces (217a, 218a).

The operation of a double clip arrangement in accordance with an embodiment of the invention is illustrated at Figs 6 and 7. As described above for the case of single clip arrangement, in the double clip arrangement the clip projections (213, 216) move along their trajectory and pass through the clip apertures (214, 215) and into the space between the clip abutments (217, 218), the first surfaces (angled, or rounded, as described previously) (219a, 220a) of the flanges (219, 220) on each the clip projections (213, 216) impinge on the clip abutments (217, 218) and force the clip projections (213, 216) to flex toward each other. The clip projections (213, 216) are each forcibly bent inwards (towards each other) as the space between the clip abutments (217, 218) accommodates not only the clip projections (213, 216), but also the flanges (219, 220) on the clip projections (213, 216), arranged on each outer surfaces of the clip projections. As described previously, the distance between the inner surfaces (clip abutment surfaces (217a, 218a)) of the clip abutments (217, 218) is dimensioned to accommodate the outer surfaces (213c, 216c) of the clip projections (213, 216), ie without the flanges (219, 220), and in order for the flanges (219, 220) to be also received in the space between the clip abutment surfaces (217a, 218a), the clip projections (213, 216) are forced to flex in an inward direction.

As the two clip projections (213, 216) advance into the space between the two clip abutments, the flanges (219, 220) are further displaced into the space until the entirety of the first surface (219a, 220a) of the flanges (219, 220) is inserted within the space and the flexure of the two clip projections (213, 216) reaches a maximum.

Without further flexure of the two clip projections (213, 216), the clip projections (213, 216) are displaced further into the space between the two clip abutments (217, 218), until the two flange edges (between the first and second surfaces (219a, 219b) (220a, 220b), of each flange (219, 220)) reach the other end of the clip abutment surfaces. As stated above, the clip projections (213, 216) are dimensioned to match the inner surfaces (clip abutment surfaces (217a, 218a)) of the clip abutments (217, 218). At this point the flanges (219, 220) on the outer surfaces (213c, 216c) of the clip projections (213, 216) cease to be constrained within the space between the clip abutments (217, 218) and the resilience in the clip projections (213, 216) forces the clip projections (213, 216) to spring outward. The inward bending of the clip projections (213, 216) ceases and the clip projections (213, 216) resume their pre-flexure shape. The second surface (219b, 220b) of each flange (219, 220) (which, as stated above, is perpendicular to the outer surface (213c, 216c) of the clip projection (213, 216)) is then located against the trailing end surface (217c, 218c) of each clip abutment (217, 218) and, in this position, it serves to prevent withdrawal of the clip projection (213, 216). In this position, the second endpiece (208) is fully inserted in the first endpiece (207) and cannot be displaced further. The first and second endpieces (207, 208) are then fixed together (clipped together) and this position is the "clipped position" of the first and second endpieces (207, 208). As long as the clip projection (213, 216) is not flexed inwardly (toward the other clip projection (216, 213)), the second surface (219b, 220b) of the flange (219, 220) is held against the trailing end surface (217c, 218c) of the clip abutment (217, 218), preventing any reverse displacement of the clip projection (213, 216). In this sense, the flange (219, 220) holds the unflexed clip projection (213, 216) in place and prevents any withdrawal from the space between the two clip abutments (217, 218).

The reader will understand that the two-clip arrangement could also be structured with two abutment surfaces on a *central* clip abutment (rather than two separate clip abutments (217, 218), as described above) and flanges on the *inner* surfaces (rather than the outer surfaces (213c, 216c), as described above) of the clip projections, wherein the entering clip projections would have been flexed *outwardly* (rather than inwardly, as described above) and would have clipped *inwardly* (rather than outwardly) around the central clip abutment (rather than on to the two outer clip abutments (217, 218), as described above). The operation of the clip arrangement in this equivalent variant is the same as that described above for the first two-clip arrangement, the clip function occurring in an equivalent manner.

It will be also be clear to the reader that both of the two-clip variants referenced herein, have an advantage over a single clip arrangement, in the sense that a symmetrical configuration of the two clip arrangements (ie one of the two variants described above), with two inward facing flanges or two outward facing flanges (angled or bevelled, as mentioned above), facilitates a more convenient and user-friendly insertion.

The displacement of the at least one clip projection (213, 216) with respect to the clip abutment (217, 218) has hitherto been described in respect of the insertion of the clip projection (213, 216) through and beyond the clip aperture (214, 215), engagement with the clip abutment (217, 218) and consequent flexure of the clip projection (213, 216), until the edge of the flange (219, 220) on the clip projection (213, 216) passes the trailing end surface (217c, 218c) of the clip abutment (217, 218) at which point the clip projection (213, 216) is no longer constrained in a flexed configuration and the flange (219, 220) "clips" behind the trailing end surface (217c, 218c) of the clip abutment (213, 216). The reader will nevertheless understand that in principle these steps and the "clipping", process, as previously described, are reversible: a clip projection (213, 216) can be "undipped" from the clip abutment (217, 218), if the clip projections (213, 216) are manipulated, by bending or flexing the clip projections (213, 216), so that the second surface of the flange "surmounts" the end surface (217c, 218c) of the clip abutment (217, 218), thereby "disengaging" or "liberating" the flange (219, 220) from the clip abutment (217, 218). Once the clip arrangement is unclipped in this way, the two endpieces (207, 208) may be accordingly detached. Consider, for example, the arrangement in Fig 2B, in which two clip projections (213, 216) visibly protrude through the opposite surface (opposite the apertures (214, 215) of the first end piece (207) (this figure illustrates an arrangement with two clip arrangements, but the reader will understand the disengagement described here may occur for each individual clip arrangement). In the Fig 2B example, were the operator to squeeze the distal ends (213b, 216b) of the clip projections (squeeze inwardly), both flanges (219, 220) would be freed from the end surface of the clip abutment (217, 218), thereby permitting the clip projections (213, 216) to be removed from the clip abutment (217, 218) and allowing the first and second endpieces (207, 208) to be disengaged from each other. The first and second endpieces (207, 208) are then no longer connected together and the corresponding constituent frame components (205, 206) are no longer joined and the frame itself may disassemble.

As a result of any unclipping, as described above, including inadvertent unclipping, there is a risk that the frame could itself disassemble. A further objective of the arrangements and methods disclosed herein is to ensure that the risk of such disassembly be reduced or eliminated. It is an objective that this be achieved without making the apparatus or the corresponding method steps more difficult or lengthy or cumbersome.

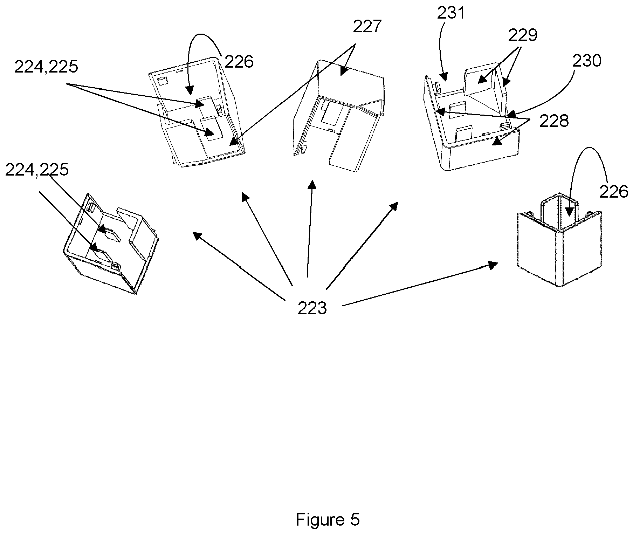

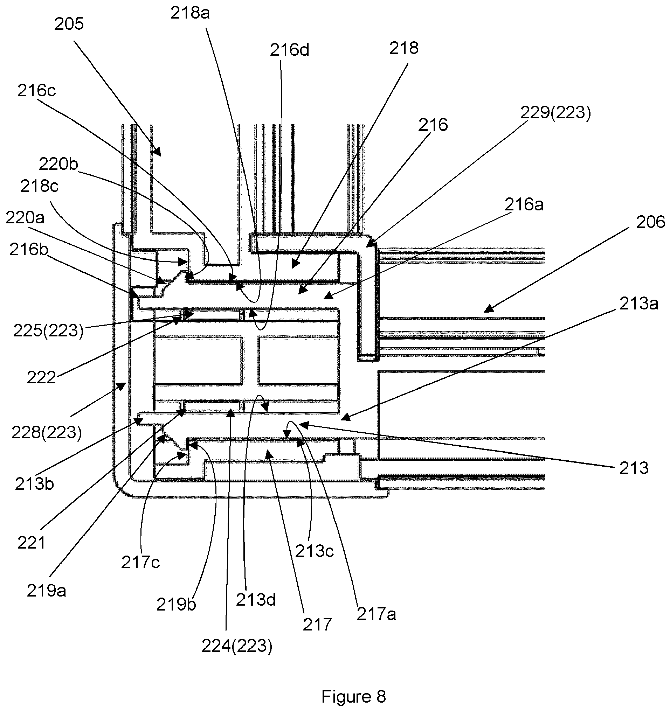

To meet such an objective, a connection lock element, as illustrated at Fig 5 (but also visible in Figs 7 and 8), is provided, in accordance with an embodiment of the apparatus and method disclosed herein, the connection lock element (223) being configured to be mounted on, and mated with, the first endpiece (207) and second endpiece (208), when the first and second endpieces (207,208) are fully engaged with each other, ie in the clipped position (as described above). The connection lock element (223) is further configured to form a housing of the first and second endpieces (207,208), when mated with the first and second endpieces (207,208) in the clipped position. The connection lock element (223) may be cuboid in form, having one open face (226), two walls (228), two partial walls (229) and a solid rear wall (227). The two sides with partial walls (229) each comprise a cut-outs or gap (231, 230) and are adjacent each other in the cuboid connection lock element of Fig 5. The cut-outs (231, 230) are configured to receive the first nexus (232) and second nexus (233), when the first and second endpieces (207, 208) are in the clipped state. The connection lock element comprises (207,208) at least one locking pin (224, 225) extending perpendicularly from the inner surface of the rear wall (227) of the connection lock element (223). In the mated position of the connection lock element, each of the at least one locking pin (224, 225) is perpendicular to a clip projection (213, 216) and configured to engage with each of the at least one clip projection (213, 216) and block the at least one clip projection (213, 216) from flexing or bending.

The mounting of the connection lock element (223) into the mated position according to an embodiment of the invention will be described in reference to Figs 6, 7 and 8 in the following passages. Although Figs 6, 7 and 8 depict a two-clip arrangement (223), this is for illustrative purposes only, and the connection lock element (223) may also be envisaged with one, two or any number of locking pins (224, 225), as appropriate, for the number of clip arrangements present in the endpieces (207, 208). The reader will also understand that, even though not explicitly illustrated in the figures (which show the first variant of the two-clip arrangements), the above description of the connection lock element (223) applies also in the case of the equivalent variant, previously referenced.

Fig 6 illustrates the two constituent frame components with respective endpieces, prior to insertion of the second endpiece (208) into the first endpiece (207): at this point the clip projection(s) (213, 216) of the second endpiece (208) are not clipped onto the clip abutment(s) (217, 218) of the first endpiece (207), and the connection lock element (223) is not mated with the endpieces (207, 208).

As discussed above, when the pins and clip projection(s) (213, 216) of the second endpiece (208) are fully inserted into the first endpiece (207), and clipped onto the clip abutment(s) (217,218), in the clipped position (as previously described), the first constituent frame component (205) is joined perpendicularly to the second constituent frame component (206), as shown in Fig 7.

Figs 6 and 7 both illustrate in the first endpiece (207) a slot or recess or aperture (221, 222) which is aligned perpendicular to the longitudinal axis of the clip projection (213, 216) and, in the sense of these two figures, at the rear of the first end piece (207), positioned immediately adjacent the position of the clip projection (213,216) in the clipped state. Thus, the slot (221, 222) continues to be visible to from the front side (in the perspective of Figs 6 and 7) of the first endpiece (207), and is not obscured by the clip projection (213,216), even after the clip projection (213,216) is clipped on to the clip abutment (217, 218). The purpose of the slot (221, 222) is explained below.

In Fig 7 the connection lock element (223) is still unmounted on the endpieces (207,208), ie it is not in the mated position. The inner parts of the second endpiece (208) inserted into the first endpiece (207) are open and are visible to any observer viewing in a direction perpendicular to the first and second constituent frame components (205,206). The clipped state of the at least one clip projection (213, 216) on the trailing end surface (217c, 218c) of the clip abutment (217, 218) is also visible to this observer. As stated above, manual intervention could at this stage "undo" the clipped state.

However, the connection lock element (223) is configured to prevent flexing or re-flexing of the at least one clip projection (213, 216) when the connection lock element (223) is in the mated position, by means of the at least one locking pin (224,225). Once the two endpieces (207,208) are in the clipped state, the connection lock element may be applied in a direction which is perpendicular to the two constituent frame components (205, 206) (and the two joined endpieces (207,208)). The connection lock element (223) may then be mounted on the two joined endpieces (207,208) as shown in Fig 8.

As stated previously, the connection lock element (223) is configured to mechanically mate with the two endpieces (207,208) (after the two endpieces (207,208) are joined in the clipped position): it has one open side (226) into which the joined endpieces (207,208) may be received and the side walls (228) and partial side walls (229) of the connection lock element (223) are dimensioned to accommodate the joined endpieces (207,208) and, effectively, to form a housing around them, when applied to the joined endpieces (207,208). The cut-outs (231, 230) in the adjacent partial walls (229) are configured to receive the first and second nexus (232, 233) of first and second endpieces (207, 208). In order to mate the the connection lock element (223) with the two endpieces (207, 208) the open side (226) of the connection lock element (223) faces the joined endpieces (207, 208) (joined in their clipped state) and is displaced vertically (in the perspective of Figs 7 and 8) onto them. The connection lock element (223) is configured to slide easily into and onto the joined endpieces (207, 208) (joined in their clipped state): it is dimensioned to form a good fit around the endpieces (207,208) and its inner form is shaped to fit with, and receive, the outer form of the joined endpieces (207,208), such that the user can manually mount the connection lock element (223) conveniently and with ease. As described above, it is envisaged that the mounting occurs by displacing the connection lock element (open face (226) thereof facing the endpieces in the clipped state) onto the joined endpieces (207, 208), in a direction perpendicular to both the constituent frame components (205, 206). Once mounted into the mated position, the rear wall (227) and side walls (228) of the connection lock element (223) form a housing over the two joined endpieces (207, 208) in the clipped position, protecting the fixing arrangements. The walls (227, 228) of the connection lock element may be opaque or may provide an aesthetic or patterned surface.

As stated above, the connection lock element (223) comprises one or more locking pin(s) (224,225), which are located on the inner surface of the rear wall (227) of the connection lock element (and extend away from and perpendicular to the rear wall (227)). The locking pin(s) (224,225) are positioned and dimensioned within the connection lock element (223) to engage, when the connection lock element (223) is in the mounted position, with the inner longitudinal surface (213d, 216d) of the clip projection (213, 216) Fig 8 illustrates the connection lock element (223) mounted on the joined endpieces (207,208): the locking pins (224,225) are then entered into the slots (221, 222) on the rear surface (rear in the sense of Figs 6, 7 and 8) of the first endpiece (207). In the mounted position the distal ends of the locking pins (224,225) are firmly held by the slots (221, 222) and in this way are prevented from any flexure or deformation. The example illustrated in Fig 8 has two locking pins (224,225) and two clip arrangements, but, as stated above, the operation is the same for one, two or more such pin-clip arrangements. The locking pins (224,225) are then immediately adjacent the relevant clip projection (213, 216), on the side (213d, 216d) of the clip projection (213, 216) *opposite* the clip abutment (217, 218), and, in this position, block any flexing or re-flexing of the clip projection (213, 216), the clip projection (213, 216) being held between the locking pin (224,225) on one side and the clip abutment (217, 218) on the other side. In the mated position, the clip projection (213, 216) is held (in effect "trapped"), between the clip abutment (217, 218), on one side (213c, 216c) of the clip projection (213, 216), and the locking pin (224,225) on the other side (213d, 216d), ie the side of the clip projection (213, 216) opposite the clip abutment (217, 218): the clip projection (213, 216) is therefore constrained on both its sides (213c, 213d; 216c, 216d) and cannot flex. As long as the connection lock element (223) remains in the mated position, the locking pins (224,225) prevent any bending of the respective clip projections (213, 216), which are constrained to remain in the clipped position by the flange (219,220) at the trailing end surface (217c, 218c) of each clip projection. The locking pins (224,225) thus secure the clip projections (213, 216) in their clipped position and eliminate any risk of the clip projections (213, 216) (and the second endpiece (208) to which it is attached) being withdrawn from the first endpiece (207).

As stated earlier, the apparatus and method as disclosed herein, may also be applied in respect of any connection of any two constituent frame components, and are not limited to corner connections at the bottom front apex (109) and top front apex (110) of a cuboid frame, such as that shown in Fig 1 and may, for example, be used at any of the eight corners of a cuboid frame, such as that illustrated in Fig 1. The connection of two constituent frame components according to the invention is not limited to scenarios in which the constituent frame components (205, 206) are in a horizontal plane, as illustrated in Figs 2A and 2B: the reader will understand that the method and apparatus for connecting two constituent frame components according to the invention, as described previously, will work in the same manner if the arrangement is rotated through 90° about the longitudinal axis of one of the constituent frame components (205, 206). It will be readily understood by the reader that, although Figs 2 to 8 illustrate the connecting of two horizontally aligned constituent frame components in the plane of those figures, the arrangement and method according to the invention, as described above, is equally applicable, and may be used, to connect two constituent frame components (205, 206), one of which is vertically aligned. It may, for example, be used to connect two constituent frame components, where one is fixed to a wall or other support (104), and the other is horizontal (106).

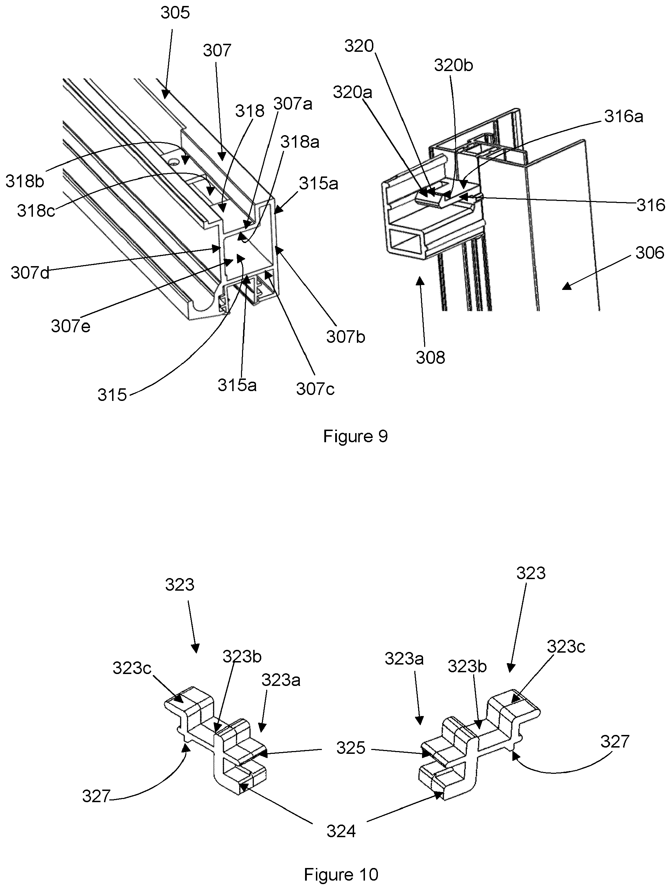

In accordance with a further embodiment of the invention, as illustrated at Figs 9 to 12, in which a first constituent frame component (305) is aligned horizontally, and a second constituent frame component (306) is vertically. A first endpiece (307) is fixed to the end of the first constituent frame component (305) and faces the second endpiece (308) which is fixed to the end of the second constituent frame component (306), wherein the two endpieces (307, 308) are configured to interact and to fit together.

The first endpiece (307) and the second endpiece (308) comprise at least one clip arrangement (316, 318) for the interaction of first and second endpieces (307, 308), the at least one clip arrangement (316, 318) being configured to fit the first and second endpieces (307, 308) together. Although only one clip arrangement (316, 318) is shown in Figs 9 to 12, it will be understood that first and second endpieces (307, 308) may comprise more than one clip arrangement (316, 318) in accordance with an embodiment of the invention.

In accordance with an embodiment of the invention, as shown in Fig 9, each of the at least one clip arrangements (316, 318) comprises, on the second endpiece (308), a clip projection (316) and, on the first endpiece (307), a clip abutment (318), the clip projection (316) of each clip arrangement (316, 318) be configured to clip onto the clip abutment (318) in a manner analogous to that already described in relation to other embodiments. The first endpiece (307) is essentially hollow, comprising an open face (307e) with an aperture (315) for receiving the second endpiece (308), with walls (307a, 307b, 307c, 307d) that extend from the perimeter (315a) of the aperture (315) parallel with the longitudinal axis of the first constituent frame component (305) and forming a space extending from the aperture (315), the space having the same cross-section as the aperture (315). One wall (307a) of the first endpiece (307) serves as clip abutment (318), being configured to engage with the clip projection (316) of the second endpiece (308), when the second endpiece (308) is inserted into the first endpiece (307). In Fig 9 this is upper wall (307a), or ceiling, of the first endpiece (307), but the reader will understand it could be any wall aligned suitably with the clip projection (316) of the second endpiece (308). The upper wall (307a) comprises a cut-out (318c) and the clip abutment (318) is that section of the upper wall (307a) between the aperture perimeter (315a) and cut-out (318c). The upper wall (307a) resumes on the other side of the cut-out (318c) as designated by wall section (318b). The clip abutment (318) has an abutment surface (318a) configured to engage with the flange (320) of the clip projection (316), the abutment surface (318a) of the clip abutment (318) having a proximal end at the aperture perimeter (315a) and a distal end at the cut-out (318c).

The aperture (315) of the first endpiece (307) is dimensioned and shaped to receive the second endpiece (308), the cross-sectional perimeter (315a) of the aperture (315) being the same shape as, but slightly larger than, the cross-sectional perimeter of the second endpiece (308), such that the second endpiece (308) may be inserted into the aperture (315) and be accommodated by it. The shape of the aperture (315) and the second endpiece (308) are depicted here as rectangular/linear in shape, but the reader will understand that the aperture (315) and second endpiece (308) can have any suitable shape, as long as they are the shaped and dimensioned to fit together by insertion.

The clip projection (316) of the second endpiece (308) may be generally cuboid in shape, with sides which may be parallel or perpendicular to the longitudinal axis of the second endpiece (308), but the reader will understand the planes of the sides of the clip projection (316) and clip abutment (318) may have any alignment, as long as the sides of the clip projection (316) are aligned with the clip abutment surface (318a). The second endpiece (308) may be aligned perpendicular to the axis of the second constituent frame component (306), as in Fig 9, or parallel to that axis (not shown in the figures but discussed in a later passage). The clip projection (316) comprises a flange (320) at its distal end, the flange (320) extending perpendicularly to the longitudinal axis of clip projection (316). The flange (320) comprises planar surfaces: a leading surface (320a), which is inclined/bevelled in relation to the longitudinal axis of the clip projection (316), and a trailing surface (320b), which is generally perpendicular to the longitudinal axis of clip projection (316).

Fig 10 illustrates perspective views of a connection lock element (323), according to an embodiment of the invention, which comprises, at a front portion (323a) of the connection lock element (323), at least one locking pin (324, 325) configured to engage with the clip arrangement (316, 318), in particular with the clip projection (316), when the clip projection is "clipped" onto the clip abutment (318), the at least one locking pin (324, 325) serving, like locking pins (224, 225) already described in relation to other embodiments, to prevent the flange (320) /the clip projection (316) unclipping from the clip abutment (318). In Fig 10 the connection lock element has two locking pins (324, 325) which together form a bracket (324, 325), configured to receive both the clip projection (316) and the clip abutment (318), when these are in the "clipped state", as described in a later passage. The front portion (323a) is joined by a central section (323b) to a rear portion (323c), the central section (323b) comprising a flange (327) at the interface of the central section (323b) with the rear portion (323c), the flange (327) being configured to cooperate with the rear perimeter of the cut-out (318c) at the wall section (318b), as described later. The rear portion of the connection lock element (323) comprises a handle (323c).

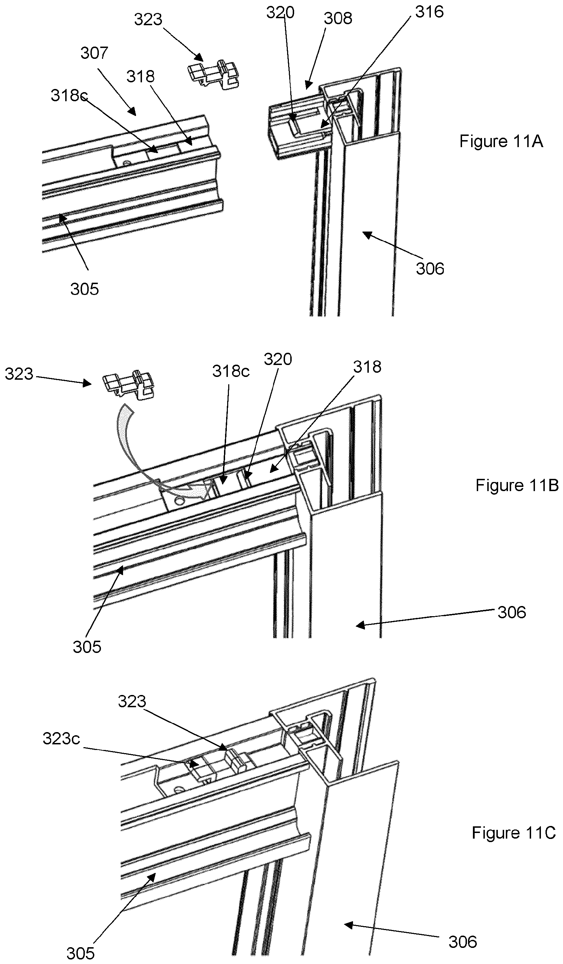

Before discussing the structure and operation of the connection lock element (323), the engagement of the clip projection (316), and the flange (320) thereon, with the clip abutment (318), is now described in reference to Figs 11 to 13, and is analogous to the engagement of clip projections (213, 216) and clip abutments (217, 218), as previously described in respect of other embodiments. When the second endpiece (308) is inserted into the aperture (315) at the open face (307e) of first endpiece (307), the leading surface (320a) of the flange (320) on the clip projection (316) in second endpiece (308) engages first, with the perimeter (315a) of the aperture (315), causing the clip projection (316) to flex, and then, as the clip projection (316) advances beyond the aperture (315), with the abutment surface (318a) of clip abutment (318) of the first endpiece (307). The abutment surface (318a) is the under surface of upper wall (307a) in the perspective of Fig 9.

In a manner analogous to that described previously in relation to other embodiments, the flexure (bending) of the clip projection (316) is away from the clip abutment (318), the extra space required to accommodate also the flange (320) causing the clip projection (316) to bend away from clip abutment (318). After insertion in the aperture (315), the trajectory of the clip projection (316) follows closely the abutment surface (318). As the clip projection (316) advances beyond the aperture (315), and the outer edge (between the two flange surfaces) of the flange (320) impinges on the clip abutment (320), in a manner analogous to that already described in relation to other embodiments, the clip projection (316) is forced to elastically bend from the clip abutment (318), ie to flex the clip projection (316).

The distance of the flange (320) at the distal end of the clip projection (316) from the proximal end of the clip projection (316) is dimensioned to correspond to the length of the abutment surface (318a) of the clip abutment (318) (between the proximal end at the aperture perimeter (315a) and distal end of the clip abutment (318)). Thus, when the clip projection (316) is fully advanced within the internal space in the first endpiece (307), the flange (320) is located just beyond the distal end of the abutment surface (318a) and the resilience of the clip projection (316) releases the clip projection (316) from its flexed state, allowing the flange (320) to enter the cut-out (318c) and the clip projection (316) to resume an unflexed state, clipped on to the distal end of the abutment surface (318a), as depicted in Fig 11B. At this point the clip projection (316) and the clip abutment (318) are then clipped to each other, and the first and second endpieces (307, 308) are also clipped to each other, ie they are in a "clipped state", analogous to the clipped state described previously for other embodiments. The outer surface (316a) of the clip projection (316) is then adjacent, and interfaces with, the abutment surface (318a) of the clip abutment (318).

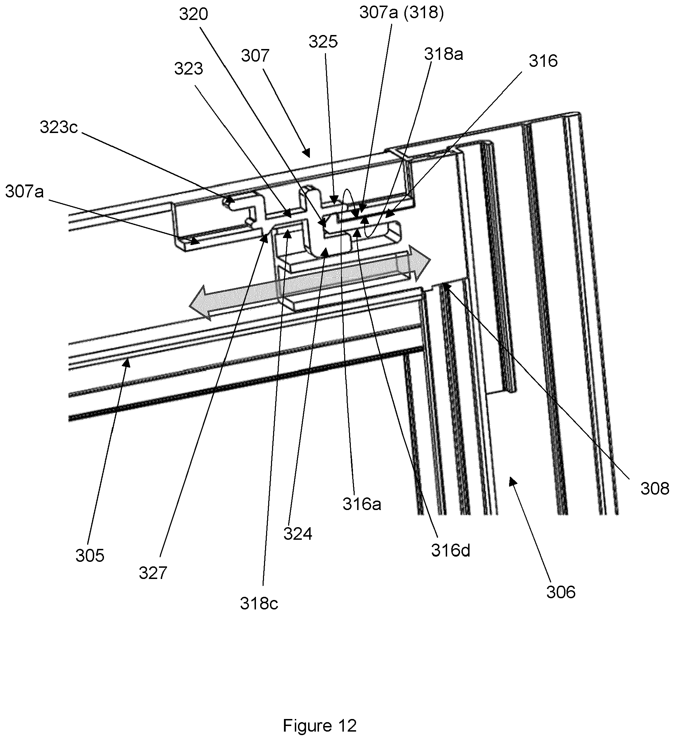

As discussed previously, there is a risk that the first and second endpieces (307, 308) become unclipped (ie if the flange (320) of the clip projection (316) is "freed" from the distal end of the abutment surface (318a)), leading to disassembly of the frame. The connection lock element (323) is configured to prevent such an "unclipping". Figs 11A to 11C are perspective views of an arrangement and method according to the invention in which the first and second endpieces (307, 308) are clipped together and then locked in the clipped position by engagement of the connection lock element (323). Fig 11A is a perspective view of the two endpieces (307, 308) *before* insertion and clipping, while Fig. 11B is a perspective view of the same endpieces (307, 308) in the clipped state, as explained above. In Figs 11A and 11B the connection lock element (323) is still separate from the two endpieces (307, 308) and not used for engagement with the endpieces (307, 308). The curved arrow in Fig 11B indicates how, when the first and second endpieces (307, 308) are in the clipped state, the connection lock element (323) may be inserted via the cut-out (318c) in the upper wall (307a) of the first endpiece (307). Fig 11C illustrates a perspective of the first and second endpiece in the clipped state, now with the connection lock element (323) displaced into a position wherein it mates with the first and second endpiece (307, 308). Only the top of the connection lock element (323) is visible in the perspective view of Fig 11C, but Fig 12 provides a cross-sectional view of the same arrangement as Fig 11C and illustrates the engagement of the locking pins (324, 325) of the connection lock element (323) with the clip projection (316) and clip abutment (318).

As shown in the cross-sectional view of Fig 12, the locking pins (324, 325) of the connection lock element (323) together form a bracket (324, 325), configured to mate with the clip projection (316) and the clip abutment (318), the space within the bracket (between the two locking pins (324, 325)) being dimensioned to receive the clip projection (316) and clip abutment (318) when they are in the clipped state. In the mated position the first locking pin (324) is positioned immediately adjacent the clip projection (316) and the second locking pin (325) is positioned immediately adjacent the clip abutment (318), but on the side opposite the clip abutment surface (318c). In other words, when the connection lock element (323) is mated with the clipped endpieces (307, 308), the bracket formed by the first and second locking pins (324, 325) effectively serves as a clamp around the clip projection - clip abutment pair (316, 318) and constrains the clip projection- clip abutment pair (316,318) to the clipped position. In a manner analogous to that already described in respect of a previous variant (in relation to Fig 8), the positioning of the first locking pin (324) immediately adjacent the clip projection (316), on the side (316d) opposite the clip abutment (318), ensures the clip projection (316) is held (in effect "trapped"), between the abutment surface (318a), on one side (316c) of the clip projection (316), and the locking pin (324) on the other side (316d) of the clip projection (316), ie the side of the clip projection (316d) opposite the clip abutment (318): the clip projection (316) is therefore constrained on both its sides (316c, 316d) and cannot flex. Thus, in the mated position the first locking pin (324) blocks any flexure of the clip projection (316), which therefore cannot diverge from the clip abutment (318) onto which it is clipped: the first locking pin prevents any unclipping of the clip projection (316) from the clip abutment (318). The reader will understand that separation of the first and second endpiece (307, 308) in the sense denoted by the double-headed arrow in Fig 12 is impossible. The second locking pin (325), which forms the second limb of the bracket (324, 325), serves to reinforce the locking function of the first locking pin (324), in the sense that, because the inner space of the bracket (324,325) is dimensioned to closely accommodate the clip projection (316) and the clip abutment (318) in the clipped state, the space between the two locking pins (324,325) is fixed and cannot be expanded, the bracket (324,325) thereby preventing any gap arising between the clip projection (316) and the clip abutment (318).

In the mounted position, the connection lock element (323) fits in the cut-out (318c), as illustrated in Fig 12, with the handle (323c) rising above the upper wall (307a) and the clip abutment (318) and being visible as such in both Figs 11C and 12. The connection lock element (323) may be "levered" into this position by operator manipulation, as shown by the transparent arrow in Fig 11B, using the handle (323c) and may be removed by reversing this operation again using the handle (323c). The maintained in this position by the lock flange (327) which is separated from the front portion (323a) of the connection lock element (323) by the central section (323b), the central section being dimensioned such that the connection lock element (323) may be inserted into the cut-out (318c): the lock flange (327) interfaces with the distal edge of the cut-out (318c) and the inner surface of the bracket (324, 325) interfaces with the distal end of the pin projection (316), clipped on the proximal edge of the cut-out (318c), as shown in Fig 12.

The positioning, in the mated position, of locking pin (324, 224, 225), immediately adjacent a clip projection (316, 213, 216), preventing any gap arising between the clip projection (316, 213, 216) and the clip abutment (318, 218, 217) to which it is clipped, is common to all the variants herein described. The embodiment described in reference to Figs 9 to 12 differs from previously described embodiments tin that the connection lock element (323,223) is mounted on the first and second endpieces (307, 308, 207, 208)(in clipped state) from a different angle. In the earlier variants the connection lock element (223) is mounted on the endpieces (207, 208) in a direction perpendicular to both of the longitudinal axes of the constituent frame components (205, 206), whereas in the latter embodiment the connection lock element (323) is mounted in a direction parallel to the longitudinal axes of the first constituent frame component (305).

Although the drawings provided herewith illustrate the connecting of two constituent frame components ((205, 206), (305, 306)) aligned perpendicular to each other, thereby forming the corner of a frame, the reader will understand that the arrangement and method herein disclosed are equally applicable to constituent frame components ((205, 206), (305, 306)) connected colinearly. In a further embodiment of the invention, wherein the constituent frame components are colinearly, rather than perpendicularly, connected, the cooperating side of the first endpiece (207), in contrast to the configuration illustrated in the drawings, is not an adjacent side (207c) of endpiece (207) but the distal surface (207e) of the endpiece (207). In relation to the endpiece (207) described in earlier passages, the structure and components of the endpiece in this further embodiment are effectively rotated through 90°, the first and second fixing means being aligned in parallel with the longitudinal axes of their respective constituent frame components (205, 206), such that the two endpieces (207, 208) may be fitted together by relative displacement along the longitudinal axes of the two constituent frame components (205, 206), their longitudinal axes being colinear. In view of the realignment of those components of first endpiece (207) configured to cooperate with those of second endpiece, the first nexus (232) being then opposite apertures (214 215), the reader will understand that cut-outs (230, 231) in the partial walls (228) are relocated in facing, rather than in adjacent, walls (228). The application of the connection lock element to the already clipped endpieces (207, 208), and the insertion of locking pin (224, 225) into slot (221, 222) in first endpiece (207) occurs in a manner analogous to that already described. Thus, in contrast to the embodiments previously described, by mere re-alignment through 90° of the structure of first endpiece (207) the apparatus and method herein disclosed may also be used to join a first and second endpiece (205, 206) colinearly.

Whereas this disclosure makes reference to several examples of the aspects and embodiments, it will be understood that embodiments are not restricted to those explicitly referenced herein: all aspects and embodiments may be modified to comprise any number of amendments, alterations or variations, including those not specifically mentioned herein. Furthermore, while various embodiments have been described, it will be understood that certain features of the embodiments may relate to only some of the described embodiments. Accordingly, the embodiments of the invention are not to be understood as limited by the description, but are limited only by the scope of the appended claims. Where some features of various examples or embodiments appear in some examples, embodiments or drawings, but not in others, this is only for brevity and intelligibility. Components, features and structures of the aspects and embodiments disclosed herein may be combined as appropriate. Even if such combinations are not illustrated or explicitly referenced herein in relation to a particular aspect of an embodiment this is merely for brevity of the description and should not be understood to mean that such combinations are excluded or cannot occur: the different features and of the various aspects and embodiments may be mixed and combined as appropriate and this disclosure should be construed as covering all combinations and permutations of features referenced herein.

## Claims

1. A system for joining components of a frame, comprising
- a first endpiece fixed to an end of a first frame component and a second endpiece fixed to an end of a second frame component, the first and second endpieces being configured to fit together and comprising at least one clip arrangement, each of the at least one clip arrangements comprising, on the first endpiece, a clip abutment and, on the second endpiece, a clip projection configured to clip on to, in a clipped state, the clip abutment, and
- a connection lock element, configured to mate with the first endpiece and the second endpiece, when the at least one clip projection and the at least one clip abutment are in the clipped state, the connection lock element comprising at least one locking pin located, when the connection lock element is in the mated position, immediately adjacent the at least one clip projection, on the side of the clip projection opposite the clip abutment.

2. A system as in Claim 1 wherein the at least one clip projection is composed of a resilient flexible material and capable of flexing transverse to the longitudinal axis of the at least one clip projection.

3. A system as in any preceding claim, wherein each of the at least one clip abutment comprises an abutment surface, a leading end surface and a trailing end surface, wherein the end surfaces are aligned perpendicular to the abutment surface.

4. A system as in any preceding claim, wherein each of the at least one clip projection comprises, at its distal end, a flange, extending perpendicular to the longitudinal axis of the at least one clip projection, the flange comprising a leading planar surface angled to the longitudinal and a trailing planar surface perpendicular to the longitudinal axis of the at least one clip projection.

5. A system as in Claim 4, wherein for each of the at least one clip arrangement, in the clipped state, the trailing surface of the flange interfaces with the trailing end surface of the clip abutment.

6. A system as in any preceding claim, wherein there are two clip arrangements.

7. A system as in any preceding claim, wherein the second end piece further comprises a major pin and a minor pin, and the first endpiece further comprises a major aperture and a minor aperture, wherein the major pin and the minor pin are configured to cooperate with the major aperture and minor aperture respectively, and the minor pin and minor aperture are small in cross-section than the major pin and minor aperture respectively.

8. A system as in any preceding claim, wherein an adjacent side of the first endpiece is configured to cooperate with the second endpiece and, in the clipped position, the first frame component is fixed perpendicular to the second frame component.

9. A system as in any preceding claim wherein the locking pin is configured to block, in the mated position, any flexure of the clip projection in the at least one clip arrangement.

10. A system as in any preceding claim wherein the walls of the connection lock element are configured, in the mated position, to house the first and second endpiece joined in the clipped position.

11. A system as in any preceding claim wherein the frame is a shower cubicle.

12. A first endpiece fixed to an end of a first frame component, configured to fit together with a second endpiece fixed to an end of a second frame component, the first endpiece comprising at least one clip abutment, each of the at least one clip abutment being configured to be clipped onto by a clip projection of the second endpiece,
the first endpiece being further configured to, when the at least one clip abutment and the at least one clip projection are in the clipped state, to mate, together with the second endpiece, with a connection lock element comprising at least one locking pin located, when the connection lock element is in the mated position, immediately adjacent the at least one clip projection, on the side of the clip projection opposite the clip abutment.

13. A first endpiece fixed to an end of a first frame component, configured to fit together with a second endpiece fixed to an end of a second frame component, the first endpiece comprising at least one clip projection, each of the at least one clip projections being configured to clip onto a clip abutment of the second endpiece, the first endpiece being further configured to, when the at least one clip abutment and the at least one clip projection are in the clipped state, to mate, together with the second endpiece, with a connection lock element comprising at least one locking pin located, when the connection lock element is in the mated position, immediately adjacent the at least one clip projection, on the side of the clip projection opposite the clip abutment.

14. A connection lock element configured to mate with a first endpiece and a second endpiece when the first endpiece and second endpiece are clipped to each other, wherein
- the first endpiece is fixed to the end of a first frame component and the second endpiece fixed to the end of a second frame component, the first and second endpieces being configured to fit together and comprising at least one clip arrangement, and
- each of the at least one clip arrangements comprise, on the first endpiece, a clip abutment and, on the second endpiece, a clip projection configured to clip on to, in a clipped state, the clip abutment,
wherein the connection lock element comprises at least one locking pin, the locking pin being located, when the connection lock element is in the mated position, immediately adjacent the at least one clip projection, on the side of the clip projection opposite the clip abutment.

15. A method of joining components of a frame, comprising
- clipping a first endpiece fixed to an end of a first frame component to a second endpiece fixed to an end of a second frame component, the first and second endpieces comprising at least one clip arrangement, wherein each of the at least one clip arrangements comprises, on the first endpiece, a clip abutment and, on the second endpiece, a clip projection configured to clip on to, in a clipped state, the clip abutment, and
- mating a connection lock element with the first endpiece and the second endpiece, when the at least one clip projection and the at least one clip abutment are in the clipped state, the connection lock element comprising at least one locking pin, and
- positioning the at least one locking pin, when the connection lock element is in the mated position, immediately adjacent the at least one clip projection, on the side of the clip projection opposite the clip abutment, and preventing movement of the at least one clip projection.
